# EUROPÄISCHE PATENTSCHRIFT

(11) **EP 0 984 187 B1**
(45) Veröffentlichungstag und Bekanntmachung des Hinweises auf die Patenterteilung: **07.06.2006**
(21) Anmeldenummer: 99115998.9
(22) Anmeldetag: 14.08.1999
(51) Int. Cl.: F16D 65/09

(54) **Stützlager für Trommelbremsen**
Support for drum brakes
Support pour freins à tambour

(30) Priorität: 04.09.1998 DE 29815916 U
(43) Veröffentlichungstag der Anmeldung: 08.03.2000
(73) Patentinhaber: FTE automotive GmbH, 96106 Ebern (DE)
(72) Erfinder: Seidl, Rolf, Dipl.-Ing.(FH), 97461 Hofheim (DE)
(74) Vertreter: Oppermann, Mark

(56) Entgegenhaltungen:
- EP-A- 0 078 115
- DE-A- 19 743 839
- DE-U- 29 704 700
- US-A- 4 998 602
- US-A- 5 159 998

## Beschreibung

Die vorliegende Erfindung bezieht sich auf ein Stützlager für eine Trommelbremse gemäß dem Oberbegriff des Patentanspruchs 1. Insbesondere bezieht sich die Erfindung auf ein Stützlager für eine hydraulische Trommelbremse, wie sie massenweise in der Kraftfahrzeugindustrie Verwendung findet.

Eine hydraulische Trommelbremse für Kraftfahrzeuge hat allgemein einen an einem Radträger des Kraftfahrzeugs befestigten Bremsträger, an dem mindestens eine, in der Regel zwei Bremsbacken gelagert sind, die wahlweise mit einer Bremstrommel in Eingriff gebracht werden können. Dazu ist am Bremsträger zwischen den federverspannten Bremsbacken ein Radbremszylinder montiert, mittels dessen die Bremsbacken auseinander gespreizt und an die Bremstrommel gepreßt werden. Diametral dem Radbremszylinder gegenüberliegend ist am Bremsträger eine Widerlageranordnung bzw. ein Stützlager für die Bremsbacken vorgesehen, das der Aufnahme der beim Bremsvorgang an den Bremsbacken wirkenden Umfangskräfte dient.

Derartige Stützlager sind im Stand der Technik auf unterschiedliche Art und Weise ausgebildet worden. So ist aus der DE-A-1 284 315 ein ortsfestes Stützlager für eine Trommelbremse bekannt, welches einen auf dem Bremsträger aufliegenden Grundkörper aufweist, auf dem ein Halteblech angeordnet ist. Der Grundkörper und das Halteblech sind mittels einer Mehrzahl von Nieten an dem Bremsträger befestigt, die entsprechend ausgefluchtete Bohrungen im Bremsträger, im Grundkörper und im Halteblech durchgreifen. Die Abstützung der beim Bremsvorgang an den Bremsbacken wirkenden Umfangskräfte erfolgt hier durch die Stirnflächen des Grundkörpers, während der Bremsträger mit dem Halteblech an den Stirnflächen des Grundkörpers Schlitze zur Aufnahme der Bremsbackenstege ausbildet, um die Bremsbacken in axialer Richtung der Trommelbremse zu führen. Eine entsprechende Befestigung des Stützlagers mittels eines Niets ist aus der US-A-2 311 765 bekannt.

Obgleich derartige Stützlager die beim Bremsvorgang auftretenden Umfangskräfte zuverlässig aufnehmen können, ist ein Nachteil dieses Stands der Technik darin zu sehen, daß Ausbildung und Montage dieser Stützlager am Bremsträger relativ aufwendig sind.

Weiterhin offenbaren die DE-A-195 33 430 und die DE-A-196 22 520 der Anmelderin einen zweiteiligen Bremsträger für hydraulische Trommelbremsen, an dem eine Widerlageranordnung für die Bremsbacken vorgesehen ist. Gemäß diesem Stand der Technik hat die Widerlageranordnung ein Halteblech, das mittels Nieten (DE-A-196 22 520) oder Blechverbindungspunkten (DE-A-195 33 430 ) an einer durch Tiefziehen ausgebildeten, gestuften Ausstellung des Bremsträgers befestigt ist. Diese Ausstellung weist einen abgesetzten Bereich auf, der mit der dem Bremsträger zugewandten Seite des Halteblechs auf beiden Seiten der Ausstellung einen Spalt ausbildet, in den der Steg der jeweiligen Bremsbacke mit geringem Axialspiel eingefügt ist. Die bei einem Bremsvorgang an den Bremsbacken auftretenden Umfangskräfte werden somit durch Seitenflächen der Ausstellung aufgenommen, während das Halteblech und der abgesetzte Bereich der Ausstellung die Bremsbacken in axialer Richtung der Trommelbremse führen.

Bei diesem Stand der Technik bestehen Probleme dahingehend, daß beim Tiefziehen der Ausstellung mit hohem Umformgrad am mindestens in diesem Bereich aus Aluminium bestehenden Bremsträger Risse und in der Folge Spaltkorrosion auftreten können, was zu einer vorzeitigen Schwächung insbesondere der mechanisch beanspruchten Übergänge zwischen Bremsträger-Grundplatte und Ausstellung führt.

In diesem Zusammenhang sei auch erwähnt, daß aus der DE-A-42 12 356 und der DE 297 04 700 U Bremsträger bekannt sind, bei denen das Stützlager einstückig mit dem Bremsträger aus Aluminium druckgegossen wird.

Einteilige Stützlager sind schließlich aus der gattungsbildenden US-A-4 998 602 und der US-A-5 159 998 bekannt. Die Geometrie dieser Stützlager legt nahe, daß es sich hierbei um gegossene oder gesenkgeschmiedete Teile handelt.

Der Erfindung liegt ausgehend vom Stand der Technik gemäß der US-A-4 998 602 die Aufgabe zugrunde, ein einfach ausgebildetes, möglichst festes Stützlager für Trommelbremsen zu schaffen, das sich mit geringem Aufwand zuverlässig am Bremsträger der Trommelbremse befestigen läßt.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 10.

Erfindungsgemäß besteht bei einem Stützlager zum Abstützen einer Bremsbacke bezüglich eines Bremsträgers einer Trommelbremse, insbesondere einer hydraulischen Kraftfahrzeug-Trommelbremse, das einen Grundkörper, einen daran vorgesehenen Lagerabschnitt für die Bremsbacke und Befestigungsmittel zur Befestigung am Bremsträger aufweist, wobei der Grundkörper mit dem Lagerabschnitt und den Befestigungsmitteln einstückig ist, der Grundkörper aus einem stranggepreßten Profilabschnitt besteht wobei der Grundkörper infolge des Strangpressens kaltverfestigt ist.

Im Ergebnis wird auf denkbar einfache Weise ein Stützlager geschaffen, wobei ein stranggepreßtes Profil lediglich abzulängen ist, um Grundkörper, Lagerabschnitt und Befestigungsmittel einteilig und aus demselben Material ohne weitere Nachbearbeitung zu erhalten. Infolge des Strangpressens kommt es darüber hinaus zu einer Kaltverfestigung des Stützlager-Werkstoffs, so daß das Stützlager eine hohe Festigkeit aufweist. Durch diese Ausbildung des Stützlagers kann weiterhin die Kontur des Bremsträgers vereinfacht werden, weil tiefe Ausstellungen zur Befestigung des Stützlagers am Bremsträger nicht notwendig sind. Dementsprechend bestehen auch die mit der Herstellung derartiger Ausstellungen verbundenen Probleme nicht mehr. Ein vorteilhafter Nebeneffekt ist hier, daß infolge der nunmehr nicht mehr maßgeblichen Tiefzieheigenschaften des Bremsträger-Werkstoffs ein Material höherer Festigkeit für den Bremsträger zum Einsatz kommen kann. Schließlich sind gegenüber dem eingangs geschilderten Stand der Technik deutliche Montagevorteile zu verzeichnen, weil nur das Stützlager und der Bremsträger gehandhabt werden müssen. Separate Befestigungsmittel, wie Nieten oder Schrauben, sind nicht notwendig.

Nach der Lehre des Patentanspruchs 2 hat der Grundkörper vorteilhaft die Form eines Quaders, der eine Deckfläche, eine der Deckfläche gegenüberliegende Auflagefläche zur Auflage auf dem Bremsträger, zwei einander gegenüberliegende Seitenflächen und an seinen Stirnseiten jeweils eine Stützfläche für die Bremsbacke aufweist. Dabei sind zweckmäßig an der Stützfläche zwei voneinander beabstandete, mindestens im am Bremsträger befestigten Zustand des Stützlagers parallel verlaufende Lagerstege ausgebildet, deren einander zugewandte Flächen zusammen mit der Stützfläche den Lagerabschnitt für die Bremsbacke ausbilden, wie im Patentanspruch 3 angegeben. Der so ausgebildete Lagerspalt für die Bremsbacke kann leicht hinsichtlich Breite, Tiefe und Lage in axialer Richtung der Trommelbremse den Erfordernissen entsprechend angepaßt werden. In einer fertigungstechnisch günstigen Ausgestaltung der Lagerstege weisen diese vorzugsweise einen rechteckigen Querschnitt auf.

Gemäß dem Patentanspruch 4 ist der Lagerabschnitt für die Bremsbacke vorteilhaft mit einem Formteil zum Schutz gegen Verschleiß versehen, das, wie im Patentanspruch 5 angegeben, in Aussparungen, die in den einander zugewandten Flächen der Lagerstege ausgebildet sind, formschlüssig und somit sicher aufgenommen ist.

Der Patentanspruch 6 sieht vor, daß als Befestigungsmittel an der Auflagefläche des Grundkörpers eine Mehrzahl von beabstandeten Befestigungsstegen ausgebildet ist, die im am Bremsträger befestigten Zustand des Stützlagers komplementär geformte Öffnungen des Bremsträgers durchgreifen und mit diesem in einfacher und gleichwohl sicherer Weise verstemmt sind. Gemäß dem Patentanspruch 7 haben die vorzugsweise drei Befestigungsstege einen rechteckigen Querschnitt und verlaufen parallel zueinander, so daß die Montage des Stützlagers am Bremsträger vorteilhaft ungerichtet erfolgen kann.

Nach der Lehre des Patentanspruchs 8 besteht der Grundkörper aus Aluminium oder einer Aluminiumlegierung, was ein nicht nur hinsichtlich Gewicht und Festigkeit, sondern auch im Hinblick auf hohe Form- und Maßgenauigkeit beim Strangpressen vorteilhafter Werkstoff ist. Darüber hinaus kommt es bei der Paarung mit einem Bremsträger aus Aluminium zur Ausbildung einer Trommelbremse in Leichtbauweise in vorteilhafter Weise nicht zu einer Elementbildung und somit Kontaktkorrosion zwischen Stützlager und Bremsträger.

Der Patentanspruch 9 sieht vor, daß bei einem Bremsträger für eine Trommelbremse, der in Sandwichbauweise aus einem Grundelement und einem Versteifungselement besteht, das Stützlager mit seinen Befestigungsmitteln das Grundelement und das Versteifungselement miteinander verbindet. Dazu haben das Grundelement und das Versteifungselement zweckmäßig miteinander ausgefluchtete, zu den Befestigungsstegen des Stützlagers komplementär geformte Öffnungen, durch die sich im am Bremsträger befestigten Zustand des Stützlagers die mit dem Bremsträger verstemmten Befestigungsstege hindurch erstrecken, wie im Patentanspruch 10 angegeben. Auch diese Maßnahmen tragen u.a. zur Vereinfachung des Aufbaus und der Montage der Trommelbremse bei, weil eine gegenüber dem Stand der Technik geringere Anzahl von Teilen mit weniger Arbeitsschritten zusammenzufügen ist.

Im folgenden wird die Erfindung anhand bevorzugter Ausführungsbeispiele unter Bezugnahme auf die beigefügte Zeichnung näher erläutert. Darin zeigen:
Die Fig. 1 eine perspektivische Ansicht eines Bremsträgers einer hydraulischen Kraftfahrzeug-Trommelbremse, an dem ein Stützlager gemäß einem bevorzugten Ausführungsbeispiel der Erfindung angebracht ist,
die Fig. 2 eine Schnittansicht des Bremsträgers gemäß Fig. 1, wobei der Schnitt durch das Stützlager entsprechend der Linie A-A in Fig. 1 verläuft,
die Fig. 3 eine perspektivische Ansicht des in Fig. 1 dargestellten Stützlagers vor Montage an dem Bremsträger in einem größeren Maßstab,
die Fig. 4 eine Draufsicht auf das in Fig. 3 dargestellte Stützlager,
die Fig. 5 eine Seitenansicht des in Fig. 3 dargestellten Stützlagers,
die Fig. 6 eine abgebrochen dargestellte Schnittansicht durch ein Stützlager gemäß einem anderen Ausführungsbeispiel der Erfindung vor Montage am Bremsträger in einem größeren Maßstab, die die Anbringung eines Verschleißschutzes im Bereich des Lagerabschnitts des Stützlagers veranschaulicht,
die Fig. 7 eine abgebrochen dargestellte Schnittansicht durch das Stützlager gemäß Fig. 6 nach Montage am Bremsträger und
die Fig. 8 eine abgebrochen dargestellte Schnittansicht durch ein Stützlager gemäß einem weiteren Ausführungsbeispiel der Erfindung in einem größeren Maßstab, wobei das Stützlager Grundelement und Versteifungselement eines zweiteiligen Bremsträgers miteinander verbindet.

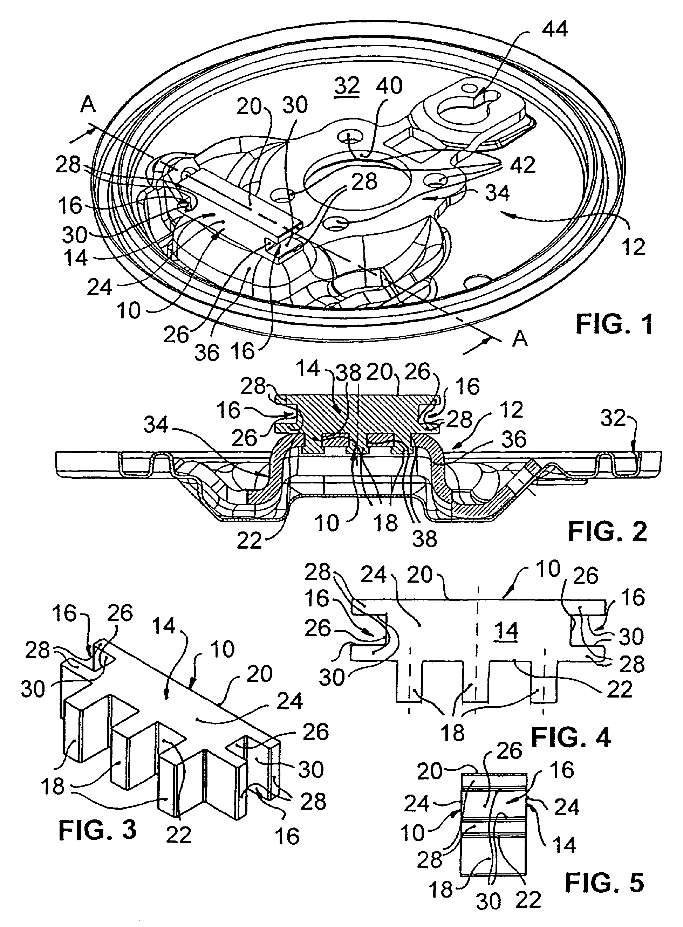

Die Fig. 1 bis 5 zeigen ein Stützlager 10 zum Abstützen von zwei Bremsbacken (nicht dargestellt) bezüglich eines Bremsträgers 12 einer hydraulischen Trommelbremse für Kraftfahrzeuge, wobei in den Fig. 1 und 2 das Stützlager 10 im am Bremsträger 12 montierten Zustand dargestellt ist, während den Fig. 3 bis 5 das Stützlager 10 vor Montage am Bremsträger 12 zu entnehmen ist. Das Stützlager 10 hat einen Grundkörper 14, zwei am Grundkörper 14 vorgesehene Lagerabschnitte 16 für die Bremsbacken und Befestigungsmittel 18 zur Befestigung am Bremsträger 12. Der Grundkörper 14 ist einstückig mit den Lagerabschnitten 16 und den Befestigungsmitteln 18 aus einem stranggepreßten Profilabschnitt, der vorzugsweise aus Aluminium oder einer Aluminiumlegierung besteht, ausgebildet.

Gemäß insbesondere den Fig. 3 bis 5 hat der Grundkörper 14 die Form eines Quaders, mit einer Deckfläche 20, einer der Deckfläche 20 gegenüberliegenden Auflagefläche 22 zur Auflage auf dem Bremsträger 12, zwei einander gegenüberliegenden Seitenflächen 24 und an seinen Stirnseiten jeweils einer Stützfläche 26 für die jeweilige Bremsbacke. An jeder Stützfläche 26 sind zwei voneinander beabstandete Lagerstege 28 ausgebildet, welche parallel zueinander verlaufen. Die einander zugewandten Flächen 30 der Lagerstege 28 bilden zusammen mit der Stützfläche 26 den Lagerabschnitt 16 für die jeweilige Bremsbacke aus, d.h. die Stützfläche 26 und die Flächen 30 begrenzen einen Spalt, in dem der Steg (nicht dargestellt) der jeweiligen Bremsbacke an deren einem Ende aufgenommen ist, wobei die Stützfläche 26 die an der jeweiligen Bremsbacke auftretenden Umfangskräfte aufnimmt, und die Flächen 30 die jeweilige Bremsbacke in axialer Richtung der Trommelbremse führen. Die einen rechteckigen Querschnitt aufweisenden Lagerstege 28 sind an ihren Längskanten verrundet oder mit einer Fase versehen, um u.a. das Einfädeln des jeweiligen Bremsbackenstegs in den Lagerabschnitt 16 zu erleichtern, und gehen ebenso mit einer Verrundung in die Stützfläche 26 über.

Wie ebenfalls den Fig. 3 bis 5 zu entnehmen ist, sind als Befestigungsmittel 18 an der Auflagefläche 22 mehrere voneinander beabstandete Befestigungsstege ausgebildet. Die im dargestellten Ausführungsbeispiel drei Befestigungsstege haben ebenfalls einen rechteckigen Querschnitt und verlaufen parallel zueinander. Auch die Befestigungsstege sind an ihren Längskanten verrundet bzw. mit einer Fase versehen, um u.a. die Montage am Bremsträger 12 zu erleichtern, und gehen mit einer Verrundung in die Auflagefläche 22 über. Zu erwähnen ist in diesem Zusammenhang noch, daß das Stützlager 10 bezüglich einer durch den mittleren Befestigungssteg verlaufenden Ebene sowie bezüglich einer dazu senkrechten, die Deckfläche 20 und die Auflagefläche 22 schneidenden Ebene spiegelbildlich ausgebildet ist, so daß es dementsprechend ungerichtet am Bremsträger 12 montiert werden kann.

Gemäß den Fig. 1 und 2 hat der zweiteilige, aus Grundelement 32 und Versteifungselement 34 aufgebaute Bremsträger 12 am aus vorzugsweise Aluminium oder einer Aluminiumlegierung bestehenden Versteifungselement 34 eine mittels Tiefziehen ausgebildete Ausstellung 36, an der das Stützlager 10 befestigt ist. Dazu weist die Ausstellung 36 drei im Querschnitt rechteckige, vorzugsweise ausgestanzte Öffnungen 38 auf, die eine zu den Befestigungsstegen komplementäre Form haben und von diesen im am Bremsträger 12 montierten Zustand des Stützlagers 10 formschlüssig durchgriffen werden. Das Stützlager 10 liegt dabei mit seiner Auflagefläche 22 auf der in Fig. 2 oberen Seite der Ausstellung 36 auf, während die Befestigungsstege auf der in Fig. 2 unteren Seite der Ausstellung 36 verstemmt bzw. vernietet sind, d.h. durch einen Umformprozeß zu einem im wesentlichen T-förmigen Querschnitt gestaucht werden, um das Stützlager 10 auch in axialer Richtung der Trommelbremse formschlüssig am Bremsträger 12 festzulegen.

Ansonsten hat der Bremsträger 12 in an sich bekannter Weise einen Befestigungsbereich, mittels dessen der Bremsträger 12 an einem Radträger (nicht dargestellt) befestigt werden kann, und der eine zentrale Öffnung 40 zur Achsdurchführung aufweist, die von einer Mehrzahl von Befestigungsbohrungen 42 umgeben ist. Schließlich ist der Bremsträger 12 dem Stützlager 10 diametral gegenüberliegend mit einem Lagerabschnitt 44 für den Radbremszylinder (nicht dargestellt) versehen.

Obgleich im dargestellten Ausführungsbeispiel drei Befestigungsstege mit rechteckigem Querschnitt und ebensolche Öffnungen 38 im Versteifungselement 34 des Bremsträgers 12 vorgesehen sind, ist für den Fachmann ersichtlich, daß die Befestigungsmittel 18 und Öffnungen 38 hinsichtlich Anzahl (weniger oder mehr als drei) und Geometrie (z.B. quadratischer Querschnitt) abgewandelt werden können. So kann den jeweiligen Festigkeitserfordernissen der Verbindung zwischen Stützlager 10 und Bremsträger 12 entsprechend die Flächenpressung an den Befestigungsmitteln 18 bzw. an der Ausstellung 36 angepaßt werden. Infolge dieser Flexibilität hinsichtlich der Anzahl und Geometrie der Befestigungsmittel 18 ist es auch möglich, die Blechdicke des Versteifungselements 34 zu minimieren, was zum einen im Hinblick auf Leichtbau von Vorteil ist und zum anderen die Ausbildung der Ausstellung 36 mittels Tiefziehen begünstigt.

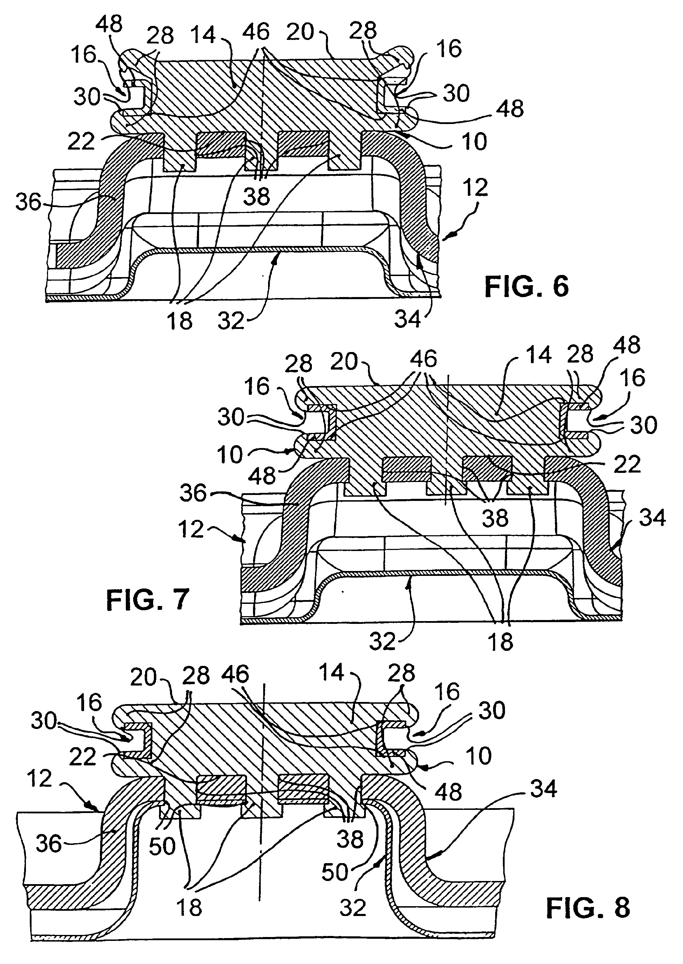

Die Fig. 6 und 7 zeigen ein anderes Ausführungsbeispiel des Stützlagers 10, das im folgenden nur hinsichtlich der Merkmale beschrieben wird, durch die es sich von dem unter Bezugnahme auf die Fig. 1 bis 5 erläuterten Ausführungsbeispiel unterscheidet.

Gemäß Fig. 6 schließen die an die Deckfläche 20 des Grundkörpers 14 angrenzenden Lagerstege 28 im nicht am Bremsträger 12 befestigten Zustand des Stützlagers 10 mit der Deckfläche 20 einen Winkel ein, d.h. sind bezüglich der Deckfläche 20 nach oben abgewinkelt. An den einander zugewandten Flächen 30 der Lagerabschnitte 16 sind Aussparungen 46 zur formschlüssigen Aufnahme eines Formteils 48 mit U-förmigen Querschnitt vorgesehen, das beispielsweise aus einem hoch vergüteten oder härtbaren Stahlblech besteht und dem Schutz der Lagerabschnitte 16 gegen Verschleiß dient.

Die Festlegung der Formteile 48 in den Aussparungen 46 erfolgt bei diesem Ausführungsbeispiel einfach und kostengünstig gleichzeitig mit der Befestigung des Stützlagers 10 am Bremsträger 12, wozu in einem Werkzeug (nicht dargestellt) die Befestigungsstege des Stützlagers 10 unten an der Ausstellung 36 des Versteifungselements 34 verstemmt werden, während die in Fig. 6 oberen Lagerstege 28 nach unten gebogen werden, um mit der Deckfläche 20 eine ebene Fläche auszubilden und die Formteile 48 formschlüssig in den Lagerabschnitten 16 festzulegen, wie es in der Fig. 7 dargestellt ist.

In der Fig. 8 ist ein weiteres Ausführungsbeispiel des Stützlagers 10 dargestellt. Dem Ausführungsbeispiel gemäß den Fig. 1 bis 5 gleiche oder entsprechende Teile bzw. Abschnitte sind wiederum mit den gleichen Bezugszeichen versehen.

Bei diesem Ausführungsbeispiel sind die Befestigungsstege des Stützlagers 10 etwas länger ausgebildet und durchgreifen Öffnungen 38, 50 in der Ausstellung 36 des Versteifungselements 34 und dem Grundelement 32, die miteinander ausgefluchtet und zu den Befestigungsstegen des Stützlagers 10 komplementär geformt sind. Während das Stützlager 10 mit der Auflagefläche 22 des Grundkörpers 14 auf der Ausstellung 36 des Versteifungselements 34 aufliegt, sind auf der in Fig. 8 unteren Seite des Grundelements 32 die Befestigungsstege des Stützlagers 10 mit dem Grundelement 32 verstemmt, wodurch nicht nur das Stützlager 10 am Bremsträger 12 befestigt ist, sondern auch das Grundelement 32 und das Versteifungselement 34 miteinander verbunden sind.

### Bezugszeichenliste

- 10: Stützlager
- 12: Bremsträger
- 14: Grundkörper
- 16: Lagerabschnitt
- 18: Befestigungsmittel
- 20: Deckfläche
- 22: Auflagefläche
- 24: Seitenfläche
- 26: Stützfläche
- 28: Lagersteg
- 30: Fläche
- 32: Grundelement
- 34: Versteifungselement
- 36: Ausstellung
- 38: Öffnung
- 40: zentrale Öffnung
- 42: Befestigungsbohrung
- 44: Lagerabschnitt
- 46: Aussparung
- 48: Formteil
- 50: Öffnung

## Patentansprüche

1. Stützlager (10) zum Abstützen einer Bremsbacke bezüglich eines Bremsträgers (12) einer Trommelbremse, insbesondere einer hydraulischen Kraftfahrzeug-Trommelbremse, mit einem Grundkörper (14), einem daran vorgesehenen Lagerabschnitt (16) für die Bremsbacke und Befestigungsmitteln (18) zur Befestigung am Bremsträger (12), wobei der Grundkörper (14) mit dem Lagerabschnitt (16) und den Befestigungsmitteln (18) einstückig ist, **dadurch gekennzeichnet, daß** der Grundkörper (14) aus einem stranggepreßten Profilabschnitt besteht, wobei der Grundkörper (14) infolge des Strangpressens kaltverfestigt ist.

2. Stützlager (10) nach Anspruch 1, **dadurch gekennzeichnet, daß** der Grundkörper (14) die Form eines Quaders hat, der eine Deckfläche (20), eine der Deckfläche (20) gegenüberliegende Auflagefläche (22) zur Auflage auf dem Bremsträger (12), zwei einander gegenüberliegende Seitenflächen (24) und an seinen Stirnseiten jeweils eine Stützfläche (26) für die Bremsbacke aufweist.

3. Stützlager (10) nach Anspruch 2, **dadurch gekennzeichnet, daß** an der Stützfläche (26) zwei voneinander beabstandete, mindestens im am Bremsträger (12) befestigten Zustand des Stützlagers (10) parallel verlaufende Lagerstege (28) ausgebildet sind, deren einander zugewandte Flächen (30) zusammen mit der Stützfläche (26) den Lagerabschnitt (16) für die Bremsbacke ausbilden, wobei die Lagerstege (28) vorzugsweise einen rechteckigen Querschnitt aufweisen.

4. Stützlager (10) nach Anspruch 3, **dadurch gekennzeichnet, daß** der Lagerabschnitt (16) für die Bremsbacke mit einem Formteil (48) zum Schutz gegen Verschleiß versehen ist.

5. Stützlager (10) nach Anspruch 4, **dadurch gekennzeichnet, daß** die einander zugewandten Flächen (30) der Lagerstege (28) mit jeweils einer Aussparung (46) versehen sind, die zur formschlüssigen Aufnahme des Formteils (48) dient.

6. Stützlager (10) nach einem der Ansprüche 2 bis 5, **dadurch gekennzeichnet, daß** als Befestigungsmittel (18) an der Auflagefläche (22) eine Mehrzahl von beabstandeten Befestigungsstegen ausgebildet ist, die im am Bremsträger (12) befestigten Zustand des Stützlagers (10) komplementär geformte Öffnungen (38, 50) des Bremsträgers (12) durchgreifen und mit diesem verstemmt sind.

7. Stützlager (10) nach Anspruch 6, **dadurch gekennzeichnet, daß** die vorzugsweise drei Befestigungsstege (18) einen rechteckigen Querschnitt aufweisen und parallel zueinander verlaufen.

8. Stützlager (10) nach einem der vorhergehenden Ansprüche, **dadurch gekennzeichnet, daß** der Grundkörper (14) aus Aluminium oder einer Aluminiumlegierung besteht.

9. Bremsträger (12) für eine Trommelbremse, insbesondere eine hydraulische Kraftfahrzeug-Trommelbremse, der in Sandwichbauweise aus einem Grundelement (32) und einem Versteifungselement (34) besteht, **gekennzeichnet durch** ein am Bremsträger (12) befestigtes Stützlager (10) nach einem der vorhergehenden Ansprüche, dessen Befestigungsmittel (18) das Grundelement (32) und das Versteifungselement (34) miteinander verbinden.

10. Bremsträger (12) nach Anspruch 9, **dadurch gekennzeichnet, daß** das Grundelement (32) und das Versteifungselement (34) miteinander ausgefluchtete, zu den Befestigungsstegen (18) des Stützlagers (10) komplementär geformte Öffnungen (38, 50) haben, durch die sich im am Bremsträger (12) befestigten Zustand des Stützlagers (10) die mit dem Bremsträger (12) verstemmten Befestigungsstege (18) hindurch erstrecken.

## Claims

1. Support bearing (10) for supporting a brake shoe with respect to a brake anchor plate (12) of a drum brake, in particular a hydraulic drum brake of a motor vehicle, comprising a base body (14), a bearing section (16) provided thereon for the brake shoe, and fixing means (18) for fixing it to the brake anchor plate (12), wherein the base body (14) is made in one piece with the bearing section (16) and the fixing means (18), **characterised in that** the base body (14) consists of an extruded profile section, wherein the base body (14) is work-hardened as a result of the extrusion.

2. Support bearing (10) according to Claim 1, **characterised in that** the base body (14) has a cuboid shape which has a top face (20), a bearing face (22) which lies opposite the top face (20) for bearing against the brake anchor plate (12), two side faces (24) which lie opposite one another and, on each of its end sides, a support face (26) for the brake shoe.

3. Support bearing (10) according to Claim 2, **characterised in that** two bearing webs (28) which are spaced apart from one another and run parallel at least in the state when the support bearing (10) is fixed to the brake anchor plate (12) are formed on the support face (26), wherein the facing surfaces (30) of said bearing webs together with the support face (26) form the bearing section (16) for the brake shoe, the bearing webs (28) preferably having a rectangular cross section.

4. Support bearing (10) according to Claim 3, **characterised in that** the bearing section (16) for the brake shoe is provided with a moulded part (48) for protection against wear.

5. Support bearing (10) according to Claim 4, **characterised in that** the facing surfaces (30) of the bearing webs (28) are in each case provided with a cutout (46) which serves to receive the moulded part (48) in a form-fitting manner.

6. Support bearing (10) according to any of Claims 2 to 5, **characterised in that** a plurality of spaced-apart fixing webs are formed as fixing means (18) on the bearing face (22), which fixing webs, in the state where the support bearing (10) is fixed to the brake anchor plate (12), engage through openings (38, 50) of complementary shape on the brake anchor plate (12) and are caulked to the latter.

7. Support bearing (10) according to Claim 6, **characterised in that** the preferably three fixing webs (18) have a rectangular cross section and run parallel to one another.

8. Support bearing (10) according to any of the preceding claims, **characterised in that** the base body (14) is made of aluminium or an aluminium alloy.

9. Brake anchor plate (12) for a drum brake, in particular a hydraulic drum brake for a motor vehicle, which is composed in a sandwich design of a base element (32) and a reinforcing element (34), **characterised by** a support bearing (10) according to any of the preceding claims which is fixed to the brake anchor plate (12), the fixing means (18) of which support bearing connect the base element (32) and the reinforcing element (34) to one another.

10. Brake anchor plate (12) according to Claim 9, **characterised in that** the base element (32) and the reinforcing element (34) have openings (38, 50) which are aligned with one another and are of complementary shape to the fixing webs (18) of the support bearing (10), through which openings the fixing webs (18) caulked to the brake anchor plate (12) extend in the state where the support bearing (10) is fixed to the brake anchor plate (12).

## Revendications

1. Palier de soutien (10) pour soutenir une mâchoire de frein par rapport au support de frein (12) d'un frein à tambour, en particulier d'un frein à tambour hydraulique de véhicule automobile, comportant un corps de base (14), un tronçon de palier (16) prévu sur celui-ci pour la mâchoire de frein et des moyens de fixation (18) pour la fixation sur le support de frein (12), dans lequel le corps de base (14) est d'un seul tenant avec le tronçon de palier (16) et les moyens de fixation (18), **caractérisé en ce que** le corps de base (14) est constitué par un tronçon profilé extrudé, le corps de base (14) étant durci à froid à la suite de l'extrusion.

2. Palier de soutien (10) selon la revendication 1, **caractérisé en ce que** le corps de base (14) a la forme d'un parallélépipède qui présente une surface de recouvrement (20), une surface d'appui (22) opposée à la surface de recouvrement (20) pour venir en appui sur le support de frein (12), et deux surfaces latérales (24) opposées l'une à l'autre et, sur chacune de ses faces frontales, une surface de soutien (26) pour la mâchoire de frein.

3. Palier de soutien (10) selon la revendication 2, **caractérisé en ce que** sur la surface de soutien (26) sont réalisées deux barrettes d'appui (28) espacées l'une de l'autre, s'étendant parallèlement au moins dans l'état de fixation du palier de soutien (10) sur le support de frein (12), dont les surfaces (30) tournées l'une vers l'autre réalisent conjointement à la surface de soutien (26) le tronçon de palier (16) pour la mâchoire de frein, les barrettes d'appui (28) présentant de préférence une section transversale rectangulaire.

4. Palier de soutien (10) selon la revendication 3, **caractérisé en ce que** le tronçon de palier (16) pour la mâchoire de frein est pourvu d'une pièce conformée (48) pour la protection contre l'usure.

5. Palier de soutien (10) selon la revendication 4, **caractérisé en ce que** les surfaces (30) tournées l'une vers l'autre, des barrettes de palier (28), sont chacune pourvues d'un évidement (46) qui sert à recevoir par coopération de formes la pièce conformée (48).

6. Palier de soutien (10) selon l'une des revendications 2 à 5, **caractérisé en ce qu'**à titre de moyen de fixation (18) une multitude de barrettes de fixation espacées sont réalisées sur la surface d'appui (22), lesquelles traversent des ouvertures (38, 50) du support de frein (12), formées de façon complémentaire dans l'état du palier de soutien (10) fixé sur le support de frein (12), et sont matées avec celui-ci.

7. Palier de soutien (10) selon la revendication 6, **caractérisé en ce que** les barrettes de fixation (18), de préférence au nombre de trois, présentent une section transversale rectangulaire et s'étendent parallèlement les unes aux autres.

8. Palier de soutien (10) selon l'une des revendications précédentes, **caractérisé en ce que** le corps de base (14) est en aluminium ou en un alliage d'aluminium.

9. Support de frein (12) pour un frein à tambour, en particulier pour un frein à tambour hydraulique de véhicule automobile, qui est constitué en sandwich par un élément de base (32) et par un élément de raidissement (34), **caractérisé par** un palier de soutien (10), fixé sur le support de frein (12), selon l'une des revendications précédentes, dont les moyens de fixation (18) relient l'un à l'autre l'élément de base (32) et l'élément de raidissement (34).

10. Support de frein (12) selon la revendication 9, **caractérisé en ce que** l'élément de base (32) et l'élément de raidissement (34) ont des ouvertures (38, 50) formées de manière complémentaire aux barrettes de fixation (18) du palier de soutien (10) et alignées l'une à l'autre, à travers lesquelles s'étendent les barrettes de fixation (18) matées avec le support de frein (12) dans l'état du palier de soutien (10) fixé au support de frein.
